# EUROPEAN PATENT SPECIFICATION

(11) **EP 4 394 679 B1**
(45) Date of publication and mention of the grant of the patent: **15.10.2025**
(21) Application number: 23219376.3
(22) Date of filing: 21.12.2023
(51) Int. Cl.: G06Q 10/10, G06Q 10/06, G06Q 10/0631, G06Q 10/1093

(54) **A SYSTEM AND METHOD FOR OPTIMIZING LOCATION SCHEDULING ACROSS MULTIPLE WORK ENVIRONMENTS**
SYSTEM UND VERFAHREN ZUR OPTIMIERUNG DER STANDORTPLANUNG ÜBER MEHRERE ARBEITSUMGEBUNGEN HINWEG
SYSTÈME ET PROCÉDÉ D'OPTIMISATION DE PLANIFICATION D'EMPLACEMENT DANS DE MULTIPLES ENVIRONNEMENTS DE TRAVAIL

(30) Priority: 30.12.2022 US 202218148741
(43) Date of publication of application: 03.07.2024
(73) Proprietor: Calabrio, Inc., Minneapolis, MN 55401 (US)
(72) Inventor: JARNIGIN, Cassie, Minneapolis MN 55401 (US); DEIGARD, Micke, Minneapolis MN 55401 (US); ABLAD, Tereza, Minneapolis MN 55401 (US)
(74) Representative: Marks & Clerk LLP

(56) References cited:
- US-A1- 2004 267 591
- US-A1- 2007 288 663
- US-A1- 2022 083 951
- US-B1- 10 719 799

## Description

### BACKGROUND

The modem workplace has expanded to incorporate a hybrid work model where employees are given the flexibility to work from either a remote location or the office. In a hybrid work model, office schedulers attempt to coordinate employee preferences with business requirements to ensure minimum coverage for employees working in the office. However, the hybrid model creates new challenges for office schedulers because organizing the rotation of employees between a remote work location option and work from the office option is complex. Often, office schedulers manually determine which employees work from a remote location and which work from the office. Manual scheduling can be a time-consuming task for the scheduler with the potential for mistakes in ensuring minimum office coverage with the required employee expertise.

It is with respect to these and other general considerations that embodiments have been described. Also, although relatively specific problems have been discussed, it should be understood that the embodiments should not be limited to solving the specific problems identified in the background.

US2004267591A1 describes a method and system for creating a workforce schedule for a set of local or remote human resources based on forecasted demand, past schedules, employee skill sets, and employee preferences. US2007288663A1 describes a method of selecting a physical location for the shared networked workplace.

### SUMMARY

Aspects of the present disclosure relate to generating a hybrid schedule that accommodates employees working from a remote location and from in the office. The hybrid schedule may be designed to coordinate employee preferences for work location with the business schedulers in-office personnel requirements among other factors. The resulting hybrid schedule may include employee work location as an output which may be viewed and edited by the employee after the schedule is created. Thus, the hybrid scheduling system improves the traditional scheduling process by reducing the need for manual scheduling oversight, enabling employees to independently enter their preferences into the system, and maximizing the benefit of the hybrid workplace model for the employees.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### BRIEF DESCRIPTION OF THE DRAWINGS

Non-limiting and non-exhaustive examples are described with reference to the following figures.
FIG. 1 is a diagram illustrating a system for optimizing location scheduling across multiple work environments, according to aspects described herein.
FIG. 2 is a block diagram illustrating a method for optimizing location scheduling across multiple work environments, according to aspects described herein.
FIG. 3 is a block diagram illustrating a method for optimizing work location for a work schedule, according to aspects described herein.
FIG. 4 illustrates a simplified block diagram of a device with which aspects of the present disclosure may be practiced, according to aspects described herein.

### DETAILED DESCRIPTION

In the following detailed description, references are made to the accompanying drawings that form a part hereof, and in which are shown by way of illustrations specific embodiments or examples. These aspects may be combined, other aspects may be utilized, and structural changes may be made without departing from the present disclosure. Embodiments may be practiced as methods, systems or devices. Accordingly, embodiments may take the form of a hardware implementation, an entirely software implementation, or an implementation combining software and hardware aspects. The following detailed description is therefore not to be taken in a limiting sense, and the scope of the present disclosure is defined by the appended claims and their equivalents.

In examples, the modern workforce is transitioning to a hybrid work setting where some employees/agents work from an in-office location while other agents work from remote locations (e.g., home, hotels, coffee shops, travel location, etc.). This evolving work environment is particularly prevalent for contact centers where recent studies have shown that 84% of contact center agents prefer to work from a remote location than a traditional in-office location. Further, if a hybrid work model is implemented at a contact center, 57% of contact center agents expect to work at an in-office location ten or fewer days per month. However, the agent' s desires to transition to a hybrid workplace are contrasted with the needs of the enterprise employer to maintain steady workflow patterns across the remote work locations. One of the primary concerns from the enterprise perspective is how to equitably assign work locations to each agent, with some agents working in-office and other agents working from a remote location, throughout the schedule period. Manually assigning locations for each agent within an enterprise is a time-consuming task with the potential for errors in assignments based on the large number of variables relating to both the agent pool and enterprise, which need to be accounted for during the scheduling process.

To address this issue, aspects of the present disclosure relate to a system and method for optimizing location scheduling across multiple work environments, including both in-office and remote work locations. The solution applies a location scheduling algorithm that is embedded into the existing scheduling process. Once the initial schedule is built, the location scheduling algorithm enhances the existing scheduling process by automatically determining where an employee works based on location optimization considerations. The algorithm works by scoring each agent based on the location optimization factors included in the algorithm, then determining a weighted aggregate value for each agent. Agents with a higher weighted aggregate value are given priority by the algorithm in their work location assignment throughout the scheduling period. The new location scheduling algorithm complements and improves the existing scheduling process by considering additional location optimization factors specific to location planning. Additionally, different weights can be applied by the algorithm in determining the aggregate value for an agent. The different weights for each location optimization factor are based on enterprise priorities which enables greater flexibility in prioritizing certain aspects of agent performance and fairness in assigning work location. Ultimately, the location scheduling algorithm is a time saving solution for the enterprise that balances agent preferences with enterprise requirements to craft an equitable solution for the workforce.

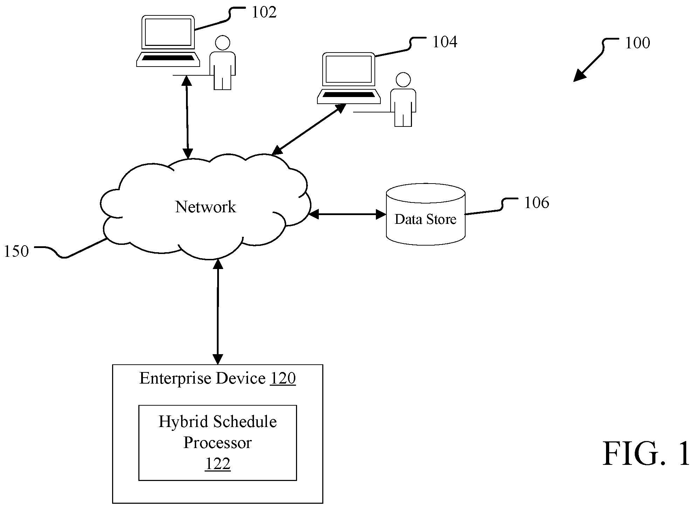

FIG. 1 is a diagram illustrating a system for optimizing location scheduling across multiple work environments, according to aspects described herein. A system 100 may include agent devices 102 and 104, a data store 106, and an enterprise device 120 which communicate over a network 150. The enterprise device may include a hybrid schedule processor 122. The network 150 may comprise one or more networks such as local area networks (LANs), wide area networks (WANs), enterprise networks, the Internet, etc. and may include one or more of wired, wireless, and/or optical portions. It should be appreciated that while multiple agents each utilizing a agent device 102 or agent device 104 may each be connected to the network 150, they do not need to be geographically collocated, but rather may be geographically dispersed but connected via network 150.

For ease of discussion, the description herein refers to a single agent device 102 which is also representative of agent device 104. The features and examples of the agent device 102 are applicable to multiple devices including agent device 104. In aspects, the agent device 102 may be any device that can receive, process, modify, and communicate content on the network 150. Examples of an agent device 102 include a mobile computer or mobile computing device (e.g., a Microsoft^{®} Surface^{®} device, a laptop computer, a notebook computer, a tablet computer such as an Apple iPad^{™}, a netbook, etc.), or a stationary computing device such as a desktop computer or PC (personal computer), telephone, mobile device, and/or a wireless device where an agent may interact with other agents and devices on network 150. Agent device 102 may be configured to execute one or more software applications (or "applications") and/or services and/or manage hardware resources (e.g., processors, memory, etc.).

Agent devices 102 and 104 and enterprise device 120 may include at least one processor, such as hybrid schedule processor 122, that executes software and/or firmware stored in memory. The software/firmware code contains instructions that, when executed by the processor causes control logic to perform the functions described herein. The term "logic" or "control logic" as used herein may include software and/or firmware executing on one or more programmable processors, application-specific integrated circuits (ASICs), field-programmable gate arrays (FPGAs), digital signal processors (DSPs), hardwired logic, or combinations thereof. Therefore, in accordance with the embodiments, various logic may be implemented in any appropriate fashion and would remain in accordance with the embodiments herein disclosed

The agent device 102 may include an application (not pictured) which displays content for use on the agent device 102 and for communication across the network 150. The application may be a native application or a web-based application. The application may operate substantially locally to agent device 102 or may operate according to a server/client paradigm in conjunction with one or more servers (not shown). The application may be used for communication across the network 150 or to view content relating to hybrid scheduling.

In accordance with some embodiments, the agent device 102 and enterprise device 120 may have access to data contained in a data store 106. The data store 106 may contain information related to scheduling attributes, agent information, and other data related to scheduling which may be utilized as described below with regard to generating a hybrid schedule. Data store 106 is a network server, cloud server, network attached storage ("NAS") device, or another suitable computing device. Data store 106 may include one or more of any type of storage mechanism or memory, including a magnetic disc (e.g., in a hard disk drive), an optical disc (e.g., in an optical disk drive), a magnetic tape (e.g., in a tape drive), a memory device such as a random-access memory (RAM) device, a read-only memory (ROM) device, etc., and/or any other suitable type of storage medium. Although only one instance of the data store 106 is shown in FIG. 1, the system 100 may include two, three, or more similar instances of the data store 106. Moreover, the network 150 may provide access to other data stores, similar to data store 106 that are located outside of the system 100, in some embodiments.

Enterprise device 120 may include one or more server devices, distributed computing platforms, cloud platform devices, processors, and/or other computing devices such as the hybrid schedule processor 122. Enterprise device 120 and hybrid schedule processor 122 communicate with data store 106, agent devices 102 and 104, via network 150. The enterprise device 120 may include a hybrid schedule processor 122 which can be utilized to generate a hybrid schedule for scheduling the work location for a hybrid workforce of one or more agents. In some embodiments, the hybrid scheduling processor 122 may receive one or more work attributes associated with an agent which are input by the agent to the agent device 102 and/or previously input and stored in data store 106. The hybrid schedule processor 122 may then execute software and/or firmware containing instructions that cause a hybrid schedule to be generated according to aspects described herein. Ultimately, the hybrid schedule processor 122 may output a hybrid schedule that complements the existing scheduling process for the business by providing insights and recommendations on how best to manage a hybrid workforce across in-office work and work at other locations.

As will be appreciated, the various methods, devices, apps, nodes, features, etc., described with respect to FIG. 1 or any of the figures described herein, are not intended to limit the system to being performed by the particular apps and features described. Accordingly, additional configurations may be used to practice the methods and systems herein and/or features and apps described may be excluded without departing from the methods and systems disclosed herein.

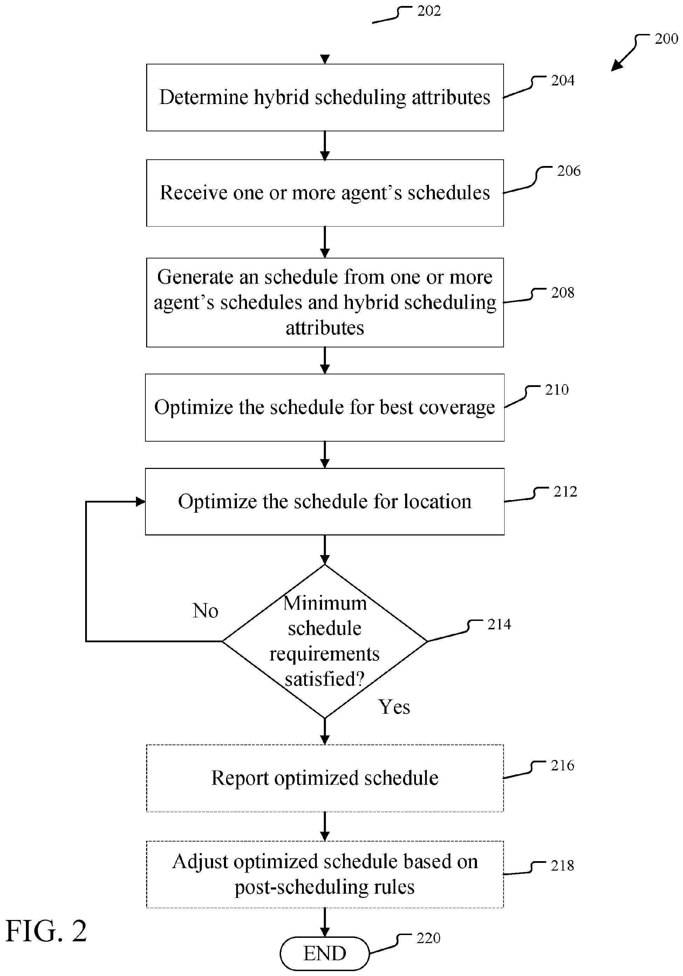

FIG. 2 is a block diagram illustrating a method for optimizing location scheduling across multiple work environments, according to aspects described herein. A general order of the operations for the method 200 is shown in FIG. 2. Generally, the method 200 begins with start operation 202 and ends with end operation 220. The method 200 may include more or fewer steps or may arrange the order of the steps differently than those shown in FIG. 2. The method 200 can be executed as computer-executable instructions executed by a computer system and encoded or stored on a computer readable medium or other non-transitory computer storage media. Further, the method 200 can be performed by gates or circuits associated with a processor, an ASIC, an FPGA, a SOC or other hardware device. Hereinafter, the method 200 shall be explained with reference to the systems, components, devices, modules, software, data structures, data characteristic representations, signaling diagrams, methods, etc., described in conjunction with FIGS. 1, 3, and 4.

Following the start operation 202, the method proceeds with configure operation 204 where the hybrid scheduling attributes are configured. The hybrid scheduling attributes may be used for generating both the initial schedule, optimizing for best coverage, and/or optimizing for location planning for in-office work and remote work at the agent level. The one or more attributes may include a plurality of information relating to the office requirements that are defined by the enterprise as well as attributes defined by one or more of the agents.

There may be agent-defined attributes relating specifically to the agent which may be entered by the agent via an agent device (e.g., agent device 102). Examples of agent-defined attributes relating may include which day or days the agent prefers to work from a remote location and/or in-office, status of the employee (e.g., full-time, part-time, experience with the business, etc.) the agent's role within the business (e.g., supervisor, employee, intern, certain skills associated with the agent, etc.), what time the agent prefers to work, regular schedule conflicts that the agent prefers to work around (e.g., childcare requirements, other family members work schedule, etc.) what shift the agent prefers to work, and other miscellaneous agent constraints which may be input into the system (e.g., medical or other appointments, time off requests, family medical leave, bereavement requests, etc.)

Additionally, there may be enterprise-defined attributes relating to enterprise specific standard operating procedures, office requirements, and other internal metrics defined by the enterprise. The enterprise-defined attributes may be stored in a data store (e.g., data store 106) and accessed by an enterprise device (e.g., enterprise device 120) for use in generating the hybrid schedule. Examples of enterprise-defined attributes may include office requirement rules such as a percentage of number of days and/or hours needed per agent at an in-office location, a percentage of number of days and/or hours needed per agent at a remote location, office open hours, skill requirements for office open hours, activities which require in-office work, percentage of time the agent has previously worked from in-office and/or from a remote location, the capacity of the office site, agent performance attributes (e.g., how well does the agent perform in certain situations, performance when in-office, performance when working remote, etc.), based on location certain activities which may be performed either in-office or from a remote location, number of agents required to perform certain in-office activities, and/or other certain enterprise preferences relating to work location.

At receive operation 206, the hybrid schedule processor (e.g., hybrid schedule processor 122) will receive one or more agent's schedules. The hybrid schedule processor may receive a schedule for each of the one or more agent's assigned to the office. The agent's schedule represents a starting point for the agent from which the hybrid schedule can be developed in order to optimize the agent's needs with office requirements. In some embodiments, the agent's schedules may be received as part of the regular scheduling process where a supervisor at the office coordinates a schedule directly for the one or more agents. In alternative embodiments, the agent's themselves may submit a preferred schedule that includes in-office and out of office days. In another embodiment, the agent schedule may be generated by a computer or other central processing center without specific regard for the scheduling attributes input by the agent.

At generate operation 208, an initial schedule is generated from the combination of the one or more received agent's schedules. The initial schedule generation is performed by the hybrid schedule processor (e.g., hybrid schedule processor 122). The initial schedule generation is performed within the office's workflow management processes utilizing scheduling algorithms to achieve minimum staffing requirements for the enterprise. In some embodiments the initial schedule may consider one or more of the hybrid scheduling attributes.

At optimize operation 210, the initial schedule generated at step 208 is optimized for best coverage based on one or more of the hybrid scheduling attributes being applied to the initial schedule. The optimization of the initial schedule with of the one or more hybrid scheduling attributes is performed by the hybrid schedule processor (e.g., hybrid schedule processor 122). The optimization is performed within the office's workflow management processes utilizing scheduling algorithms to achieve best coverage and best staffing results for in-office operations. The initial schedule does not optimize location planning in-office and out of office for the one or more agents. For example, the initial schedule may need to provide coverage for a seven-day work week including times and/or shifts that each agent will work. Additionally, each agent may be required to work in the office three days per week, work a total of forty hours per week, and have two days off per week. Since the initial schedule prioritizes the enterprise defined attributes to ensure that minimum staffing requirements are achieved for best coverage the agents are assigned to meet the listed requirements and in some embodiments based on the hybrid scheduling attributes previously defined by the agents and enterprise. For example, at operation 210 staffing decisions regarding which agent gets a day off, which agent works a morning versus an afternoon shift, the number of hours in a shift, etc. are decided, assigned, and optimized for best coverage. However, at operation 210 the schedule is not optimized for location. As such, without further optimization it is likely that the initial schedule would need to be manually adjusted to account for which agent should work in-office or from a remote location on a certain day and/or time.

At optimize operation 212, the initial schedule is optimized for location planning by the hybrid schedule processor (e.g., hybrid schedule processor 122). At step 212 the initial schedule is optimized for location for the one or more agent's included in the initial schedule. Optimization for specific location for each agent is performed utilizing a location scheduling algorithm. In some embodiments, the location scheduling algorithm is designed as a weighted decision-making model that determines which agent should be assigned to work from a remote location before another agent. The algorithm is customizable such that the combination of hybrid scheduling attributes and other location optimization factors determined by the enterprise and/or an agent, may be included in the algorithm based on system design preferences of the scheduler. The optimization is directed toward which agents should be assigned to which work location (e.g., who should work from a remote location or from in-office) on a particular date and time, throughout the relevant work period.

The location scheduling algorithm may be designed to include location optimization factors that are used by the algorithm to calculate an aggregate value for each agent. The location optimization factors utilized in the algorithm may include agent performance factors, agent adherence factors, and/or an agent preference unfulfillment factor. Additionally, in some embodiments one or more of the previously defined hybrid scheduling attributes may be utilized as a location optimization factor by the algorithm. Each of the location optimization factors included in the algorithm may be assigned a value from zero to one for each agent. Then each factor included in the algorithm is given a weighted value multiplier which is applied to each agent specific value to create a weighted value for each factor. Weights can be assigned based on the allocation method preferred for the algorithm by the enterprise. Examples of allocation method for weighting may include weighting by fairness, random weighting, weighting in favor of agent preferences, and/or weighting in favor of agent performance in addition to a plurality of other weighting methods. The weighted values are then combined into an aggregate value for each agent. The aggregate values are used by the algorithm to optimize the schedule for location such that agents with higher aggregate values are more likely to receive their preferred work location. For example a person with a higher aggregate value may receive their preference of a remote work location.

Location optimization may be updated by adjusting the location optimization factors in the algorithm, modifying the assigned algorithm weights, and/or the algorithm weighting method based on the design choices of the scheduler. In some instances it may be preferable to update the algorithm on an automatic schedule, such as when agent performance data is updated in the system, to account for agent performance over the previous work period. This could mean that the updates occur instantly, daily, nightly, weekly, and/or at a longer time interval. In alternative embodiments, the update cycle could be user initiated as a manual update based on enterprise preferences or other business needs. The optimized location assigned to an agent is a reportable metric that may be disseminated throughout the enterprise to other systems by the hybrid schedule processor to indicate enterprise operational statistics.

At decision operation 214, it is determined whether the minimum schedule requirements are satisfied by the optimized schedule, by the hybrid schedule processor (e.g., hybrid schedule processor 122). The minimum schedule requirements are satisfied when the minimum number of agents assigned to work in-office is greater than or equal to the enterprise defined number of agents which are required to work in-office for the schedule period. If the minimum schedule requirements are not satisfied the method returns to operation 212, to optimize the schedule for location iteratively until the requirements are satisfied. If the minimum schedule requirements are satisfied then flow progresses to optional report operation 216 where the optimized schedule is reported throughout the system to all users. The report may specifically display the location for each agent either as an attribute within the report or as an additional visual indicator showing either the in-office or remote work location.

Operation 218 is an optional step, as shown by the dashed box, where the optimized schedule may be adjusted based on post-scheduling rules defined by the enterprise. The post-scheduling adjustment may be performed by a hybrid schedule processor (e.g., hybrid schedule processor 122). In this instance, the work location assigned to each agent in the optimized schedule may be changed to account for situations which arise after the schedule is generated. The changes could be prompted by the agents, supervisors, or other enterprise employee as a result of workplace capacity changes, updated agent preferences, emergencies, absence requests, peer to peer agent shift trades, optional agent self-scheduling of location, location inputs resulting from post-schedule generation meetings, and/or other planning considerations that occur post-schedule generation. The method ends with end operation 220.

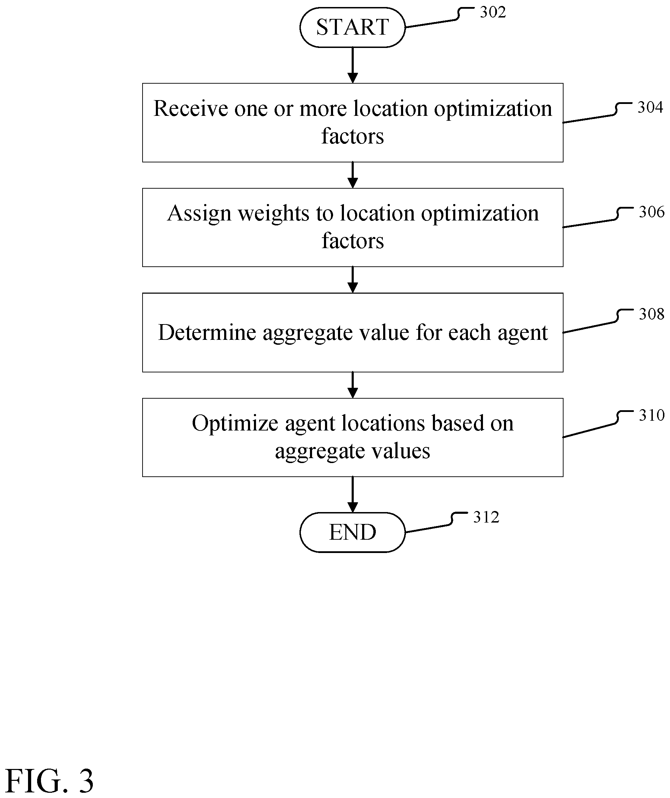

FIG. 3 is a block diagram illustrating a method for optimizing work location for a work schedule, according to aspects described herein. A general order of the operations for the method 300 is shown in FIG. 3. Generally, the method 300 begins with start operation 302 and ends with end operation 312. The method 300 may include more or fewer steps or may arrange the order of the steps differently than those shown in FIG. 3. The method 300 can be executed as computer-executable instructions executed by a computer system and encoded or stored on a computer readable medium or other non-transitory computer storage media. Further, the method 300 can be performed by gates or circuits associated with a processor, an ASIC, an FPGA, a SOC or other hardware device. Hereinafter, the method 300 shall be explained with reference to the systems, components, devices, modules, software, data structures, data characteristic representations, signaling diagrams, methods, etc., described in conjunction with FIGS. 1, 2, and 4.

Following start operation 302, at receive operation 304, one or more location optimization factors are received for use in the location scheduling algorithm, by the hybrid schedule processor (e.g., hybrid schedule processor 122). The location optimization factors utilized in the algorithm may include agent performance factors, agent adherence factors, and/or an agent preference unfulfillment factor as well as one or more of the previously defined hybrid scheduling attributes.

An agent performance factor is a measure of agent performance at their work duties. Examples of agent performance factors may include how well does the agent perform in certain situations and/or at certain job duties, performance when in-office, performance when working remote, and other similar performance related metrics specific to the enterprise. The agent adherence factor is a measure of agent adherence to the assigned work schedule. In some embodiments, the agent adherence factors describe how well each agent adheres to the daily assigned work schedule such as taking breaks at the scheduled times, being present for work from the scheduled start and end of each day, working from the correct location, etc. The agent adherence attributes may be generalized for both in-office and remote work and/or they may be specific to show results when the agent works in-office versus when the agent works from a remote location. Agent preference unfulfillment is a workplace optimization measure of how the generated schedule satisfies an agent's daily work preferences. In some embodiments, the agent preference unfulfillment attempts to ensure the generated schedule meets as many of each agent's daily preferences as possible. In some embodiments, the location optimization factors may be a composite of agent-defined attributes input as part of the hybrid scheduling attributes. Thus, the agent preference unfulfillment is a measure of a specific agent's input preferences for a specific workday as compared to all other agents' preferences for the same workday. Additionally, certain of the enterprise defined attributes input as part of the hybrid scheduling attributes may be included in the algorithm as a location optimization factor based on design choices for the algorithm.

The location optimization factors are assigned a value from zero to one which represents a score that each agent receives for that factor. The closer the assigned value is to one the better the agent's score is for that factor. The scores may be assigned for each factor and each agent by the hybrid schedule processor based on agent and enterprise inputs which were previously utilized to determine the hybrid scheduling attributes. For example, agent adherence values may be stored in a data store (e.g., data store 106) and the hybrid schedule processor may access the scores from the data store when assigning the score. Alternatively, other factors may be stored on a third-party system (not pictured) and accessed via the network (e.g., network 150). The hybrid schedule processor may maintain the scores automatically for each agent across the enterprise during the work period until the next update cycle. For example, the algorithm may include three location optimization factors, agent performance, agent adherence, and agent preference unfulfillment. The included factors may be scored for each agent such that a first agent may have a score of 0.5 for performance, 1.0 for adherence, and 1.0 for preference unfulfillment. A second agent may score 1.0 for performance, 1.0 for adherence, and 0.0 for preference unfulfillment and a third agent may score 0.8 for performance, 1.0 for adherence, and 1.0 for preference unfulfillment.

At assign operation 306 weights may be assigned to each of the selected location optimization factors by the hybrid schedule processor (e.g., hybrid schedule processor 122). Weights are utilized to adjust the scoring method of the algorithm based on the allocation method preferred by the enterprise. The weights increase the scores of certain of the location optimization factors over other factors in order to produce an outcome in location scheduling corresponding to the enterprise's priorities. The value of the weights may be any number positive or negative as preferred by the enterprise. In many instances however, the value of the weights will be a value between one and ten.

Weights can be assigned based on the allocation method preferred for the algorithm by the enterprise. Examples of allocation method for weighting may include weighting by fairness, random weighting, weighting in favor of agent preferences, and/or weighting in favor of agent performance in addition to a plurality of other weighting methods. Continuing the previous example, if a fairness allocation method is applied, the enterprise may be optimizing fairness in location scheduling across the agent pool and therefore apply a standard 1.0 weight to each included location optimization factor. In an alternative embodiment, if an agent performance allocation method is applied, the weights may be different for each location optimization factor. In this instance the assigned weights which will be applied to each agent's score may be 2.0 for agent performance, 1.0 for adherence, and 1.0 for preference unfulfillment. In a further embodiment, if a random allocation method is applied the assigned weights for each factor may be 1.0 for performance, 1.0 for adherence, and 0.0 for preference unfulfillment.

At determine operation 308, an aggregate value for each agent is determined by the hybrid schedule processor (e.g., hybrid schedule processor 122). The aggregate value is a sum of the weighted values for the factors included in the algorithm. An aggregate value is computed automatically for each agent. Continuing the previous example, if a fairness allocation method with standard 1.0 weights is applied to a first agent may have a score of 0.5 for performance, 1.0 for adherence, and 1.0 for preference unfulfillment, the aggregate value for the first agent is 2.5. Alternatively, if an agent performance allocation method with weights of 2.0 for agent performance, 1.0 for adherence, and 1.0 for preference unfulfillment is applied to the same first agent, the aggregate value for the first agent is 3.0. If a random allocation method is applied to the first agent with weights of 1.0 for performance, 1.0 for adherence, and 0.0 for preference unfulfillment, the aggregate value for the first agent is 1.5. Thus, the application of certain allocation method to the factors has the potential to impact the location optimization for an agent specifically by modifying their position within the larger agent pool.

At optimize operation 310, the agent work location is optimized based on the determined aggregate values by the hybrid schedule processor (e.g., hybrid schedule processor 122). The aggregate values are used by the algorithm to optimize the schedule for location such that agents with higher aggregate values are more likely to receive their preferred work location. For example, a first agent with an aggregate value of 2.5, a second agent with an aggregate value of 2.0, and a third agent with an aggregate value of 2.8. The algorithm would automatically compare the aggregate values for each agent and assign the third agent, which the highest aggregate value score, their preferred work location prior to the first and second agents. The first agent would receive the next highest preference for work location, with the second agent receiving lowest priority. This process would continue for each schedule interval of the work period until the work location for each agent is assigned. The method ends with end operation 312.

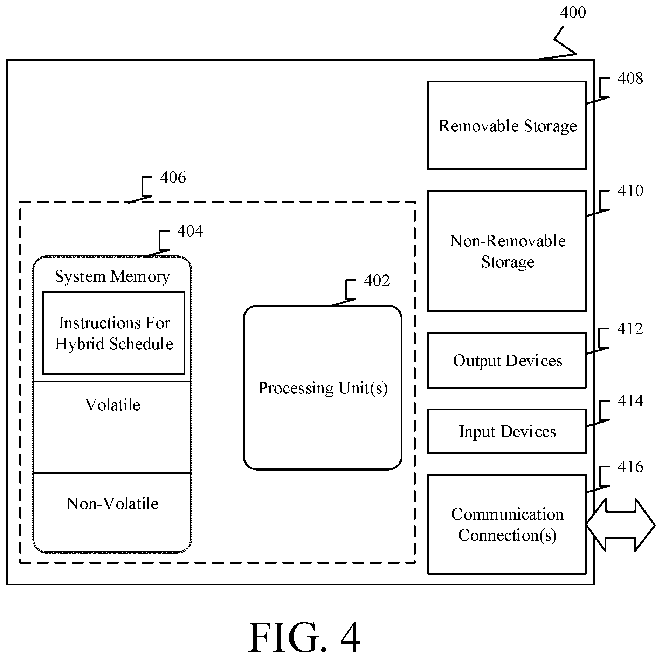

FIG. 4 illustrates a simplified block diagram of a device with which aspects of the present disclosure may be practiced, according to aspects described herein. The device may be a mobile computing device, for example. One or more of the present embodiments may be implemented in an operating environment 400. This is only one example of a suitable operating environment and is not intended to suggest any limitation as to the scope of use or functionality. Other well-known computing systems, environments, and/or configurations that may be suitable for use include, but are not limited to, personal computers, server computers, hand-held or laptop devices, multiprocessor systems, microprocessor-based systems, programmable consumer electronics such as smartphones, network PCs, minicomputers, mainframe computers, distributed computing environments that include any of the above systems or devices, and the like.

In its most basic configuration, the operating environment 400 typically includes at least one processing unit 402 and memory 404. Depending on the exact configuration and type of computing device, memory 404 (e.g., instructions for hybrid scheduling as disclosed herein) may be volatile (such as RAM), non-volatile (such as ROM, flash memory, etc.), or some combination of the two. This most basic configuration is illustrated in FIG. 4 by dashed line 406. Further, the operating environment 400 may also include storage devices (removable, 408, and/or non-removable, 410) including, but not limited to, magnetic or optical disks or tape. Similarly, the operating environment 400 may also have input device(s) 414 such as remote controller, keyboard, mouse, pen, voice input, on-board sensors, etc. and/or output device(s) 412 such as a display, speakers, printer, motors, etc. Also included in the environment may be one or more communication connections 416, such as LAN, WAN, a near-field communications network, a cellular broadband network, point to point, etc.

Operating environment 400 typically includes at least some form of computer readable media. Computer readable media can be any available media that can be accessed by the at least one processing unit 402 or other devices comprising the operating environment. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other tangible, non-transitory medium which can be used to store the desired information. Computer storage media does not include communication media. Computer storage media does not include a carrier wave or other propagated or modulated data signal.

Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media.

The operating environment 400 may be a single computer operating in a networked environment using logical connections to one or more remote computers. The remote computer may be a personal computer, a server, a router, a network PC, a peer device or other common network node, and typically includes many or all of the elements described above as well as others not so mentioned. The logical connections may include any method supported by available communications media. Such networking environments are commonplace in-offices, enterprise-wide computer networks, intranets and the Internet.

According to an embodiment of the present disclosure, a system is disclosed comprising at least one processor, and memory storing instructions that, when executed by the at least one processor, causes the system to perform a set of operations, the set of operations comprising determining one or more hybrid scheduling attributes, receiving one or more agent's schedules, generating a schedule based on the one or more agent's schedules and hybrid scheduling attributes, optimizing the schedule for best coverage, and optimizing the schedule for location.

In various embodiments of the disclosure, determining that the schedule satisfies the minimum schedule requirements.

In various embodiments of the disclosure, reporting an optimized schedule.

In various embodiments of the disclosure, adjusting the optimized schedule based on post-scheduling rules.

In various embodiments of the disclosure, wherein the hybrid scheduling attributes comprise agent-defined attributes and enterprise-defined attributes.

In various embodiments of the disclosure, wherein agent-defined attributes further comprise which day or days the agent prefers to work from a remote location and in-office, status of the agent, the agent's role within the business, what time the agent prefers to work, regular schedule conflicts that the agent prefers to work around, what shift the agent prefers to work, and other miscellaneous agent constraints.

In various embodiments of the disclosure, wherein enterprise-defined attributes further comprise enterprise-defined attributes relating to enterprise specific standard operating procedures, office requirements, and other internal metrics defined by the enterprise.

In various embodiments of the disclosure, a method is disclosed comprising determining one or more hybrid scheduling attributes, receiving one or more agent's schedules, generating a schedule based on the one or more agent's schedules and hybrid scheduling attributes, optimizing the schedule for best coverage, optimizing the schedule for location.

In various embodiments of the disclosure, determining that the schedule satisfies the minimum schedule requirements.

In various embodiments of the disclosure, reporting an optimized schedule.

In various embodiments of the disclosure, adjusting the optimized schedule based on post-scheduling rules.

In various embodiments of the disclosure, wherein the hybrid scheduling attributes comprise agent-defined attributes and enterprise-defined attributes.

In various embodiments of the disclosure, wherein agent-defined attributes further comprise which day or days the agent prefers to work from a remote location and in-office, status of the agent, the agent's role within the business, what time the agent prefers to work, regular schedule conflicts that the agent prefers to work around, what shift the agent prefers to work, and other miscellaneous agent constraints.

In various embodiments of the disclosure, wherein enterprise-defined attributes further comprise enterprise-defined attributes relating to enterprise specific standard operating procedures, office requirements, and other internal metrics defined by the enterprise.

According to an embodiment of the present disclosure a method is disclosed comprising receiving one or more location optimization factors, assigning one or more weights to the location optimization factors, determining an aggregate value for one or more agents, optimizing an agent location based on the aggregate value.

In various embodiments of the disclosure, wherein optimizing an agent location based on the aggregate value further comprises assigning an agent with a higher aggregate value their preferred work location.

In various embodiments of the disclosure, wherein the location optimization factors comprise one or more of an agent performance factor, an agent adherence factor, an agent preference unfulfillment factor, and a hybrid scheduling attribute.

In various embodiments of the disclosure, wherein an agent performance factor comprises a measure of agent performance at their work duties.

In various embodiments of the disclosure, wherein an agent adherence factor comprises a measure of agent adherence to the assigned work schedule.

In various embodiments of the disclosure, wherein an agent preference unfulfillment comprises a workplace optimization measure of how the generated schedule satisfies an agent's daily work preferences.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more aspects provided in this application are not intended to limit or restrict the scope of the claims. The aspects, examples, and details provided in this application are considered sufficient to convey possession and enable others to make and use claimed aspects of the disclosure. The disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the scope of the claims.

## Claims

1. A computer-implemented method comprising:
determining (204) one or more hybrid scheduling attributes;
receiving (206) one or more agents' schedules;
generating (208) a schedule based on the one or more agent's schedules and hybrid scheduling attributes;
optimizing (210), based on the one or more hybrid scheduling attributes, the schedule for best coverage and staffing for in-office operations;
optimizing (212) the schedule for location, wherein optimizing the schedule for location
further comprises:
for each of the one or more agents, determining an agent performance factor, wherein the agent performance factor represents agent performance when in-office and agent performance when working remote; and
optimizing the schedule for location based upon the agent performance factor;
generating a report for the schedule; and
distributing (216) the optimized report via a network.

2. The method of claim 1, further comprising:
determining that the schedule satisfies the minimum schedule requirements.

3. The method of claim 1 or 2, further comprising:
reporting an optimized schedule.

4. The method of claim 1, 2 or 3, further comprising:
adjusting the optimized schedule based on post-scheduling rules.

5. The method of any preceding claim, wherein the hybrid scheduling attributes comprise agent-defined attributes and enterprise-defined attributes.

6. The method of claim 5, wherein agent-defined attributes further comprise which day or days the agent prefers to work from a remote location and in-office, status of the agent, the agent's role within the business, what time the agent prefers to work, regular schedule conflicts that the agent prefers to work around, what shift the agent prefers to work, and other miscellaneous agent constraints.

7. The method of claim 5 or 6, wherein enterprise-defined attributes further comprise enterprise-defined attributes relating to enterprise specific standard operating procedures, office requirements, and other internal metrics defined by the enterprise.

8. A system comprising:
at least one processor; and
memory storing instructions that, when executed by the at least one processor, causes the system to perform the method of any preceding claim.

## Patentansprüche

1. Computerimplementiertes Verfahren, umfassend:
Bestimmen (204) eines oder mehrerer hybrider Planungsattribute;
Empfangen (206) von Dienstplänen eines oder mehrerer Agenten;
Generieren (208) eines Dienstplans basierend auf den Dienstplänen und hybriden Planungsattributen des einen oder der mehreren Agenten;
Optimieren (210) des Dienstplans hinsichtlich bester Abdeckung und Personalbesetzung für einen Bürobetrieb auf der Grundlage des einen oder der mehreren hybriden Planungsattribute;
Optimieren (212) des Dienstplans für einen Standort, wobei Optimieren des Dienstplans für einen Standort weiter umfasst:
Bestimmen eines Agentenleistungsfaktors für jeden des einen oder der mehreren Agenten, wobei der Agentenleistungsfaktor Agentenleistung im Büro und Agentenleistung bei der Arbeit im Außendienst darstellt; und
Optimieren des Dienstplans für einen Standort basierend auf dem Agentenleistungsfaktor;
Generieren eines Berichts für den Dienstplan; und
Verteilen (216) des optimierten Berichts über ein Netzwerk.

2. Verfahren nach Anspruch 1, weiter umfassend:
Bestimmen, dass der Dienstplan die Mindestanforderungen an den Dienstplan erfüllt.

3. Verfahren nach Anspruch 1 oder 2, weiter umfassend:
Melden eines optimierten Dienstplans.

4. Verfahren nach Anspruch 1, 2 oder 3, weiter umfassend:
Anpassen des optimierten Dienstplans basierend auf Regeln für die Nachplanung.

5. Verfahren nach einem vorstehenden Anspruch, wobei die hybriden Planungsattribute agentendefinierte Attribute und unternehmensdefinierte Attribute umfassen.

6. Verfahren nach Anspruch 5, wobei agentendefinierte Attribute weiter einen Tag oder Tage, an denen der Agent bevorzugt von einem entfernten Standort und im Büro arbeitet, Status des Agenten, Rolle des Agenten innerhalb des Unternehmens, bevorzugte Arbeitszeit des Agenten, regelmäßige Dienstplankonflikte, welche der Agent bevorzugt umgeht, Schicht, in welcher der Agent bevorzugt arbeitet, und sonstige verschiedene Agentenbeschränkungen umfassen.

7. Verfahren nach Anspruch 5 oder 6, wobei unternehmensdefinierte Attribute weiter unternehmensdefinierte Attribute umfassen, welche sich auf unternehmensspezifische Standardarbeitsanweisungen, Büroanforderungen und andere vom Unternehmen definierte interne Kennzahlen beziehen.

8. System, umfassend:
zumindest einen Prozessor; und
Speicher, welcher Anweisungen speichert, welche, wenn sie von dem zumindest einen Prozessor ausgeführt werden, das System veranlassen, das Verfahren nach einem vorstehenden Anspruch durchzuführen.

## Revendications

1. Procédé mis en œuvre par ordinateur comprenant :
la détermination (204) d'un ou de plusieurs attributs de planification hybrides ;
la réception (206) d'un ou de plusieurs calendriers d'agent ;
la génération (208) d'un calendrier sur la base des un ou plusieurs calendriers d'agent et attributs de planification hybrides ;
l'optimisation (210), sur la base des un ou plusieurs attributs de planification hybrides, du calendrier pour la meilleure couverture et la meilleure dotation en personnel pour des opérations au bureau ;
l'optimisation (212) du calendrier de localisation, dans lequel l'optimisation du calendrier de localisation comprend en outre :
pour chacun des un ou plusieurs agents, la détermination d'un facteur de performance d'agent, dans lequel le facteur de performance d'agent représente une performance d'agent lorsqu'il est au bureau et une performance d'agent lorsqu'il est en télétravail ; et
l'optimisation du calendrier de localisation sur la base du facteur de performance d'agent ;
la génération d'un rapport pour le calendrier ; et
la distribution (216) du rapport optimisé par le biais d'un réseau.

2. Procédé selon la revendication 1, comprenant en outre :
la détermination pour savoir si le calendrier satisfait les exigences de calendrier minimales.

3. Procédé selon la revendication 1 ou 2, comprenant en outre :
la rapport d'un calendrier optimisé.

4. Procédé selon la revendication 1, 2 ou 3, comprenant en outre :
l'ajustement du calendrier optimisé sur la base de règles de post-planification.

5. Procédé selon une quelconque revendication précédente, dans lequel les attributs de planification hybrides comprennent des attributs définis par l'agent et des attributs définis par l'entreprise.

6. Procédé selon la revendication 5, dans lequel des attributs définis par l'agent comprennent en outre quel jour ou quels jours l'agent préfère travailler en télétravail et au bureau, un statut de l'agent, le rôle de l'agent au sein de l'entreprise, à quel moment l'agent préfère travailler, des conflits de calendrier réguliers autour desquels l'agent préfère travailler, avec quelle équipe l'agent préfère travailler, et d'autres diverses contraintes d'agent.

7. Procédé selon la revendication 5 ou 6, dans lequel des attributs définis par l'entreprise comprennent en outre des attributs définis par l'entreprise se rapportant à des procédures de fonctionnement standards spécifiques à l'entreprise, à des exigences de bureau et à d'autres mesures internes définies par l'entreprise.

8. Système comprenant :
au moins un processeur ; et
de la mémoire stockant des instructions qui, lorsqu'elles sont exécutées par le au moins un processeur, amènent le système à réaliser le procédé selon une quelconque revendication précédente.
